# EUROPEAN PATENT SPECIFICATION

(11) **EP 4 368 777 B1**
(45) Date of publication and mention of the grant of the patent: **07.05.2025**
(21) Application number: 22205978.4
(22) Date of filing: 08.11.2022
(51) Int. Cl.: E01C 19/48

(54) **A VIBRATION DRIVE TRAIN FOR MAKING A SCREED BODY OF A SCREED DEVICE OF A PAVER VIBRATE, A SCREED BODY, A SCREED DEVICE AND A PAVER**
VIBRATIONSANTRIEBSSTRANG ZUR HERSTELLUNG EINES ESTRICHKÖRPERS EINER ESTRICHVORRICHTUNG EINES PFLASTERERS, ESTRICHKÖRPER, ESTRICHVORRICHTUNG UND PFLASTERER
CHAÎNE CINÉMATIQUE VIBRANTE POUR FAIRE VIBRER UN CORPS DE POUTRE LISSEUSE D'UN DISPOSITIF DE POUTRE LISSEUSE D'UNE FINISSEUSE, CORPS DE POUTRE LISSEUSE, DISPOSITIF DE POUTRE LISSEUSE ET FINISSEUSE

(43) Date of publication of application: 15.05.2024
(73) Proprietor: Ammann Schweiz AG, 4900 Langenthal (CH)
(72) Inventor: Kappel, Marc, 31787 Hameln (DE); Ebbighausen, Dennis, 31785 Hameln (DE)
(74) Representative: Eisenführ Speiser

(56) References cited:
- EP-A2- 2 325 392
- WO-A1-2013/177915
- DE-A1- 3 209 989
- US-A- 5 868 522
- US-A1- 2017 183 831

## Description

### TECHNICAL FIELD

The invention relates to a vibration drive train for making a screed body of a screed device of a paver vibrate. Further, the invention relates to a screed body, a screed device and a paver.

Preferably, the vibration drive train is applied in a screed body of a paver. In particular, the vibration drive train is applied in a screed device of a paver. Although the invention will be described - in particular - with respect to the paver, the invention is not restricted to this particular heavy-duty vehicle, but may also be applied in other heavy-duty vehicles with similar requirements. For example, the vibration drive train may also be applied in a tamper of a heavy duty vehicle.

### BACKGROUND

A paver is a machine used to produce unbound and bound layers such as crushed stone, asphalt and concrete. For this purpose, a paver usually has one screed device arranged at its back. Pavers are designed to produce surfaces, usually roadways, of different widths by compacting the surface via the screed device. Usually, the screed device is attached to the paver by a screed attachment unit. By means of the screed attachment unit, the screed device can lifted up in a transport position when not paving or lowered down into a paving position for paving. Further, the screed attachment unit allows to adjust the angle at which the screed device rests on the surface to be produced. It is to be understood that in the paving position the screed device can rest on the surface in different angles. Accordingly, the screed attachment unit is usually attached to the paver by some kind of lifting device, which is configured to lift the screed device up in the transport position or lower it down in the paving position. Further, the screed attachment unit comprises some kind of angle adjustment device, which allows to adjust the angle at which the screed device rests on the surface to be produced.

Usually, the screed device may comprise two screed units, also called main screed units that are attached to the screed attachment unit at the back of the paver. Preferably, the two main screed units are swivel mounted to the screed attachment unit in such a manner that they can swivel around an axis that usually extends along the travel direction of the paver. However, these main screed units are usually not configured for a relative translational movement orthogonal to the travel direction of the paver.

It may be preferred that the screed device comprises in addition to the main screed units, two displaceable screed units each being attached to one main screed unit. These two displaceable screed units may be retracted and extended, for example by hydraulic means, using corresponding linear guides relative to the main screed units orthogonally to the paver's direction of travel to vary the width of the screed device to and, thus, to vary the width of the surface to be paved. It is to be understood that additional screed bodies can be attached to the displaceable screed units increase the width of surfaces to be paved. This kind of screed device allows paving surfaces of up to 12 m width. However, larger dimensions of paving surfaces are also conceivable, for example up to 13 m or up to 16 m and more.

Usually, the main screed units comprise one screed body. The displaceable screed units may comprise several screed bodies. They may comprise one or more screed bodies for a long extension orthogonal to the direction of travel of the paver and/or one or more screed bodies for a short extension orthogonal to the direction of travel of the paver. Usually, these extensions are coupled to the displaceable screed units after being transported to the construction site for paving the surface. For transporting purposes these extensions are usually decoupled.

In order to assure a properly produced surface, the screed device and the respective screed units need to be stiff on the one side but also flexible to compensate torsional and/or bending loads induced during operation - whether due to forces acting on the screed device as a result of the adjustment of the respective screed bodies or from the ground to be produced. The operation of the paver may require, for example, that screed units interleave with each other, meaning that they rest on the surface to paved with different angles. This may be the case, for example, when a curved section of a road is to be produced. For this purpose, by means of the angle adjustment device, the angle of one of the screed units may be increase while the angle of the other screed unitis kept in a default position or decreased until a desired slope is achieved. It is to understand that in this operation mode, the screed device is subject to a torsional and/or bending load.

To improve compaction, a screed device usually comprises some kind of vibration system that stimulate the screed device to vibrate. Such a vibration system may not only improve an even compaction over the entire paving width but may also enable to produce a closed and level structure. For example, CN 112 342 871 A and US 5,516,231 A disclose different solutions of some kind of vibration system. Moreover, EP 2 325 392 A2 discloses a vibration system comprising a rotatable vibration shaft extending along a rotational axis and comprising an unbalance mass for generating a vibration between the shaft ends, a torsionally stiff tubular bearing housing through which part of the vibration shaft extends, the tubular housing being firmly attached to the screed body and comprising a ball bearing arranged therein and adapted for rotatably bearing the vibration haft towards the tubular bearing housing. DE 32 09 989 A1 discloses a similar vibration system.

It is known to use a vibration shaft rotatably mounted inside the respective screed unit as vibration systems to stimulate the vibration. In order for the vibration system to remain operational despite the torsional and bending loads during paver operation, it is known to support the vibration shaft with appropriate spherical roller bearings, i.e. self-aligning bearings, that are able to align misalignments due to bending and torsion of the screed devices. Such kind of self-bearings are expensive to procure and to operate. Nevertheless, these self-aligning bearings are necessary in order to compensate for the torsion and bending to which the screed devices are subjected in operation.

However, self-aligning bearings such as spherical rollers of spherical roller bearings wobble inside the inner and outer bearing ring in an axial direction. Further, it is difficult to seal such kind of bearings respectively keep such kind of bearing properly sealed in operation over their lifetime. Such kind of spherical roller bearings require regular lubrication during operation to ensure a long lifetime. In this respect, this type of self-aligning bearing is comparatively maintenance-intensive. Further, the spherical roller bearings must be designed to be comparatively wide in order to be able to ensure proper bearing arrangements during operation of the vibration system inside of the screed device. The use of these bearings thus stands in the way of a compact design.

As alternative - that may at least partly overcome the disadvantages of the vibration system elaborated above - it is also known to make use of a hydraulic pulse generator for generating compacting vibrations. It is also conceivable that a motor having a short motor output shaft with an unbalance mass may be used as vibration system. In particular, it may be preferred to use several such kind of motors for producing compacting vibrations. These solutions have the disadvantage that they are comparatively less compact. Further, it can be very time-consuming and complex to synchronize the vibration at several vibration sources so that a desired compaction of the surface to be produced is generated.

### SUMMARY

An object of the invention is to provide a vibration drive train, a screed body, a screed device, and a paver that overcome the disadvantages elaborated above. In particular, an object of the invention is to provide a vibration drive train, a screed body, a screed device, and a paver that are easy to maintain and, at the same time, allows to manufacture a surface of at least the same quality as known from solutions of the prior art. Furthermore, preferably, an object of the invention is to provide a vibration drive train, a screed body, a screed device, and a paver that is less expensive compared to known solutions.

According to a first aspect of the invention, the object is achieved by a vibration drive train according to claim 1.

This vibration drive train is configured for making a screed body of a screed device of a paver vibrate. By means of the vibration drive train a screed body and, thus, a screed device of the paver is stimulated to vibrate. This allows an even compaction over the entire paving width but may also enable to produce a closed and level structure.

To stimulate vibration of the screed device, the vibration drive train comprises a rotatable vibration shaft extending along a rotational axis between a first shaft end and a second shaft end. The vibration shaft comprises an unbalance mass for generating a vibration arranged between the first and second shaft ends. This is achieved by arranging the mass eccentrically to the axis of rotation. Depending on the rotational position of the mass around the axis of rotation, the eccentric arrangement causes a centrifugal force, which, depending on the rotational speed, causes the screed body to vibrate.

For this purpose, however, the vibration shaft must be mechanically coupled to the screed body. It is therefore provided that the vibration drive train comprises a torsionally stiff tubular bearing housing, wherein the vibration shaft extends through the tubular bearing housing. The tubular bearing housing is adapted to be firmly attached to the screed body, for example by means of some kind of material-locking and/or form-fit and/or force-fit connection. The vibration shaft and the torsionally stiff tubular bearing housing are mechanically coupled via a first ball bearing unit and second ball bearing unit. The first and second ball bearing units consist of or comprise one or more ball bearings. The first ball bearing unit and the second ball bearing unit are arranged inside the tubular bearing housing spaced apart along the rotational axis, wherein the first and second bearing unit are adapted for rotatably bearing the vibration shaft towards the tubular bearing housing.

The use of ball bearing units, as such, are not suitable to compensate misalignments. However, the vibration drive train does not require compensation of misalignments. This is due to the mounting of the rotatable vibration shaft with the first and second ball bearing unit inside the torsionally stiff tubular bearing housing. The torsionally stiff tubular bearing housing prevents the torsion of the screed device or the individual screed bodies from being transmitted to the rotatable vibration shaft. Further, since the use of the ball bearing units enables a more compact bearing arrangement than the spherical roller bearings, the torsion of the screed device or the screed body also has less effect on the torsionally stiff tubular bearing housing and, thus, on the rotatable vibration shaft.

Since the ball bearings have lower lubrication requirements during operation, additional maintenance and costs are reduced.

As to further advantages as well as to preferred embodiments and details of the vibration drive train, reference is made to the corresponding aspects and embodiments of the screed body, the screed device and/or the paver described herein below.

According to a preferred embodiment of the vibration drive train, the first ball bearing unit and/or the second ball bearing unit is a groove ball bearing and/or is a bearing that is not adapted for levelling off misalignments. This type of bearing makes maintenance in this area unnecessary. Further, it avoids pollution by grease that is coming out of the regularly greased bearings used today.

In a further preferred embodiment of the vibration drive train, the unbalance mass and/or the tubular bearing housing is arranged between the first ball bearing unit and the second ball bearing unit. Additionally or alternatively, the unbalance mass and/or the tubular bearing housing extend from the first ball bearing unit and the second ball bearing unit. Due to the arrangement of the unbalance mass between the bearings, the force generated by the rotation of the eccentrically arranged mass is transmitted particularly effectively to the screed bodies of the screed device.

Further, according to a preferred embodiment of the vibration drive train, the unbalance mass is shaped as a cylindrical shaft section, which is arranged eccentrically to the axis of rotation of the vibration shaft. Additionally or alternatively, the unbalance mass is a mass welded and/or bolted to the vibration shaft. The unbalance mass that is shaped as a cylindrical shaft section can be produced particularly cost-effectively and easily.

Preferably, the rotatable vibration shaft comprises a first cylindrical shaped bearing section and a second cylindrical shaped bearing section, wherein the unbalance mass is arranged between the first cylindrical shaped bearing section and the second cylindrical shaped bearing section.

According to another preferred embodiment of the vibration drive train, the vibration shaft, in particular the first shaft end of the vibration shaft, is provided with a clutch to couple the motor with the vibration shaft. Preferably the clutch is adapted for coupling the motor with the vibration shaft in a form-fit, force-fit and/or material-fit manner. In particular, the clutch may comprise some kind of screw connection to connect the vibration shaft, in particular the first shaft end of the vibration shaft, with the motor. Hereby, the motor may easily be connected to and disconnected from the vibration shaft.

In another preferred embodiment, the vibration drive train comprises a fastening device configured for fastening the tubular bearing housing to a screed support structure of the screed body. In particular, the fastening device is designed to detachably fasten the vibration drive train to the screed support structure. This allows for easy assembly or disassembly as well as maintenance.

In yet a further preferred embodiment of the vibration drive train, the fastening device is arranged on the outside of the tubular bearing housing.

Further, according to a preferred embodiment of the vibration drive train, the fastening device is adapted to firmly attach the vibration drive train to the screed device in a translational direction and/or rotational direction. This allows the vibration generated by the vibration drive train to be transferred to the screed device particularly effectively.

According to a further preferred embodiment of the vibration drive train, the fastening device comprises a first fastening unit arranged in the area of the first bearing unit and/or a second fastening unit arranged in the area of the second bearing unit. By this arrangement the vibration generated by the vibration drive train to be transferred to the screed device is particularly effective.

In a further preferred embodiment, the vibration drive train comprises a motor that is connected to the first shaft end of the vibration shaft via the clutch. This concept establishes a fixed connection between the motor and the first shaft end of the vibration shaft. This allows easier way of mounting the motor.

Preferably, according to another embodiment, the vibration drive train comprises a torque support that is configured to support the torque provided by the motor towards the screed body, in particular the screed support structure. This preferred embodiment, in particular the torque support in combination with the clutch introduced, results in an easier way of mounting the motor and also it avoids misalignment between motor and the vibration shaft and, therefore, creates no force that wants to misalign the shaft in the bearings.

According to another preferred embodiment of the vibration drive train, the torque support is adapted to provide translational displacement along the rotational axis and/or orthogonal to the rotational axis. Preferably, the torque support is stiff in the direction of rotation to support the drive torque of the motor against the support structure of the screed body. Further, according to a second aspect of the invention, the object is achieved by a screed body according to claim 13. This screed body comprises at least one vibration drive train as described above.

Further, according to a third aspect of the invention, the object is achieved by a screed device according to claim 14. This screed device comprises at least one vibration drive train as described above.

Further, according to a fourth aspect of the invention, the object is achieved by a paver according to claim 15. This paver comprises at least one screed device as described above.

As to the advantages, preferred embodiments and details of the screed body, the screed device and/or the paver, reference is made to the corresponding aspects and embodiments of the vibration drive train described herein above.

Embodiments of the invention are now described below with reference to the drawings.

These are not necessarily intended to show the embodiments to scale; rather, where useful for explanation, the drawings are in schematized and/or slightly distorted form. With regard to additions to the gauges directly recognizable from the drawings, reference is made to the relevant prior art. It should be borne in mind that a wide variety of modifications and changes concerning the shape and detail of an embodiment can be made without departing from the general idea of the invention. The features of the invention disclosed in the description, in the drawings as well as in the claims may be essential for the further development of the invention both individually and in any combination. In addition, all combinations of at least two of the features disclosed in the description, the drawings and/or the claims fall within the scope of the invention. The general idea of the invention is not limited to the exact form or detail of the preferred embodiments shown and described below, as long as the variations fall under the scope of the appended claims. In the case of stated design ranges, values lying within the stated limits are also intended to be disclosed as limiting values and to be capable of being used and claimed as desired. For simplicity, identical reference signs are used below for identical or similar parts or parts with identical or similar function.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a three-dimensional view of a paver in a preferred embodiment;
- Fig. 2: is a three-dimensional, sectional view of a screed device in a preferred embodiment of the paver shown in Fig. 1;
- Fig. 3: is a three-dimensional, sectional view of a screed body in a preferred embodiment of the screed device shown in Fig. 2;
- Fig. 4: is a three-dimensional, exploded view of a vibration drive train in a preferred embodiment of the screed body shown in Fig. 3;
- Fig. 5: is a sectional side view of the vibration drive train shown in Fig. 4; and
- Fig. 6: is a side view of the vibration drive train shown in Fig. 4.

### DETAILED DESCRIPTION OF EXAMPLE EMBODIMENTS OF THE INVENTION

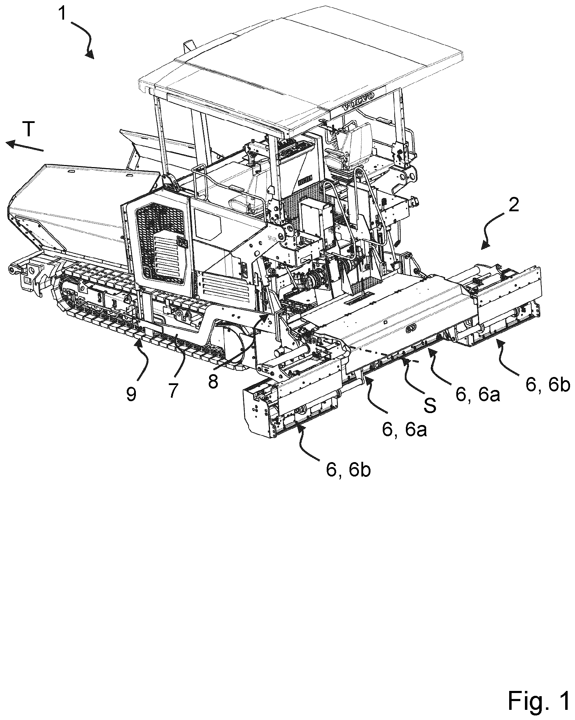

Figure 1 shows a vehicle in form of a paver 1. Although the embodiment of the invention will be described with respect to the paver, the invention is not restricted to this particular heavy-duty vehicle. The invention may also be applied in other heavy-duty vehicles with similar requirements. For example, the vibration drive train may also be applied in a tamper of a heavy duty vehicle.

As can be seen, the paver 1 comprises one screed device 2 having several screed units 6. The screed device 2 is arranged at the back of the paver 1. For operation, i.e. to produce a road surface, the screed device 2 is arranged behind the paver 1 in the direction of travel T of the paver 1. Thus, the screed device 2 virtually follows the paver 1 when a road surface is produced. The screed device 2 is attached to the paver by a screed attachment unit 7. By means of the screed attachment unit 7, the screed device 2 can lifted up in a transport position when not paving (not shown) or lowered down into a paving position for paving as shown in Figure 1. Accordingly, the screed attachment unit 7 is usually attached to the paver 1 by some kind of lifting device 8, which is configured to lift the screed device 2 up in the transport position or lower it down in the paving position. Further, the screed attachment unit 7 allows to adjust the angle at which the screed device 2 rests on the surface to be produced. To achieve this, the screed attachment unit 7 comprises some kind of angle adjustment device 9, which allows to adjust the angle at which the screed device 2 rests on the surface to be produced.

The two screed units 6 arranged in the middle, directly behind the paver 2, are also known as main screed units 6a. These two main screed units 6a are swivel mounted to the screed attachment unit 7 in such a manner that they can swivel around a swivel axis S that extends in the direction of travel T of the paver 2. This allows to adjust the slope of the road surface. Further, it can be seen that attached to each main screed unit 6a a displaceable screed unit 6b is attached comprising respective extensions to increase the width of the paver 1 for paving.

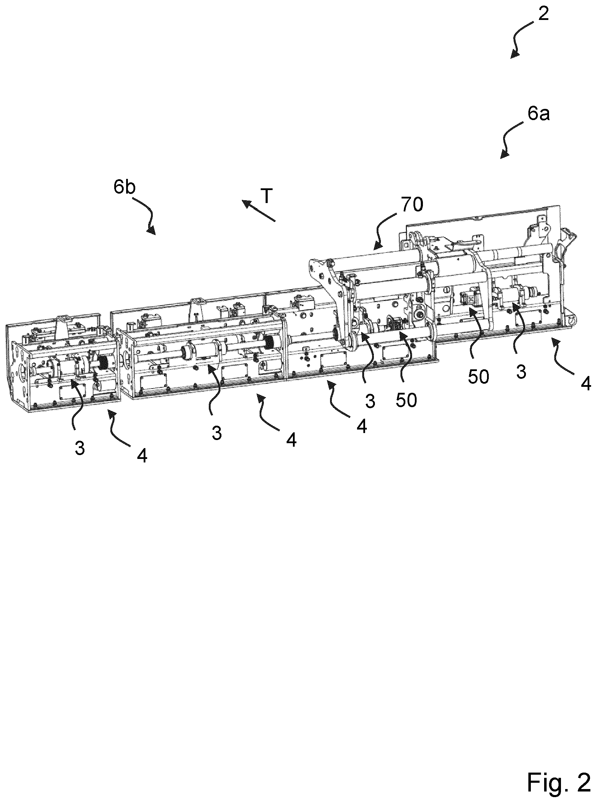

Figure 2 is a three-dimensional, sectional view of one half of a screed device 2 in a preferred embodiment of the paver 1 shown in Figure 1. In this view, a so called main screed unit 6a is shown on the right side that is adapted to be firmly attached at the back of the paver as shown in Figure 1. It can be seen that this main screed unit 6a comprises one screed body 4. Movably coupled to this main screed unit 6 is a screed unit 6, the so called displaceable screed unit 6b, that is displaceable orthogonal to the direction of travel T to the paver 1. Coupled to this displaceable screed unit 6b is a screed body 4 for long extension (in the middle) and one screed body 4 for short extension (on the very left side)

The screed body 4 on the very right side of the screed device 2 shown in Figure 2 is configured to be connected to the paver 1 as described above. The three remaining screed bodies 4 of the displaceable arranged screed unit 6b on the left side of one half of the screed device 2 shown in Figure 2 are attached to each other at their end faces 4a, 4b and are arranged movably with respect to the main screed unit 6a on the right side in a translational manner. For this purpose, a corresponding linear drive and guide unit 70 are provided, which mechanically couple the screed body 4 on the right side of the main screed unit 6a with the other screed bodies 4 of the displaceable screed unit 6b so that the other screed bodies 4 can be retracted and extended transverse to the direction of travel T of the paver 1.

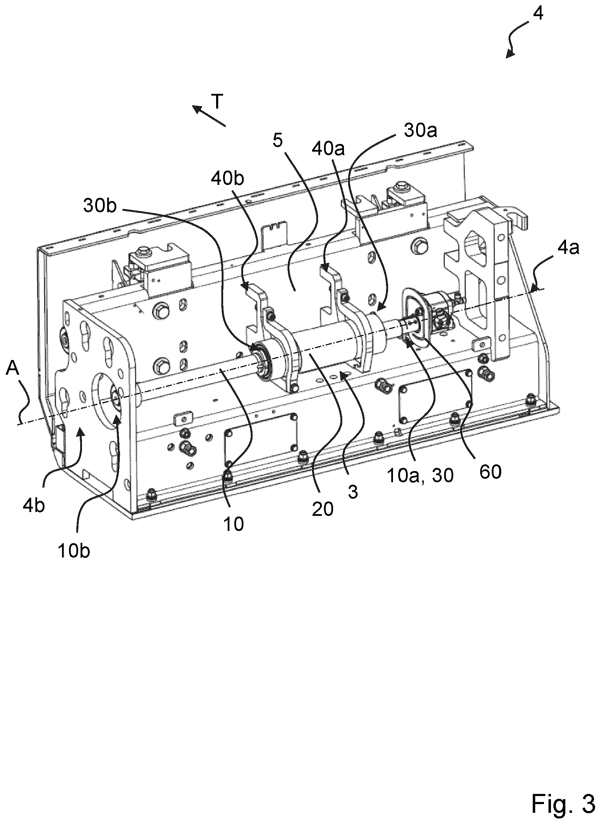

Figure 3 is a three-dimensional, sectional view of a screed body 4 for long extension in a preferred embodiment of the half of the screed device 2 shown in Figure 2. It can be seen that the screed body 4 extends along the rotational axis A, orthogonal to the direction of travel T of the paver 1, between end faces 4a, 4b. The end faces 4a, 4b are essentially defined by the screed support structure 5, which can be designed as a flange for connection to another screed body 4 at the end faces 4a, 4b.

By means of a fastening device 40 a vibration drive train 3 is firmly attached to the screed support structure 5 and, thus, to the screed device 2. The fastening device 40 is configured to firmly attach the tubular bearing housing 30 of the vibration drive train 3 to the screed support structure 5 of the screed body 4 in a translational direction and rotational direction. For this purpose, the fastening device 40 is arranged on the outside of the torsionally stiff tubular bearing housing 20. The fastening device 40 comprises a first fastening unit 40a and a second fastening unit 40b that are arranged spaced apart from one another along the rotational axis A.

Inside of torsionally stiff tubular bearing housing 20 a rotatable vibration shaft 10 is provided that extends along a rotational axis A between a first shaft end 10a and a second shaft end 10b. By means of a first ball bearing unit 30a and second ball bearing unit 30b arranged inside the torsionally stiff tubular bearing housing 20 spaced apart along the rotational axis A. The first and second bearing unit 30a, 30b are adapted for rotatably bearing the vibration shaft 10 towards the tubular bearing housing 20. In this preferred embodiment, the first and second ball bearing unit 30a, 30b are each a groove ball bearing. Although these ball bearings are not really suitable for compensating misalignments, they are particularly cost-effective and therefore preferable to more expensive and, in particular, more maintenance-intensive rolling bearings. In the present case, however, this is only possible due to the torsionally stiff tubular bearing housing 20 according to the invention.

It can be seen that in the area of the first bearing unit 30a and the second bearing unit 30b the respective first fastening unit 40a and second fastening unit 40b are provided. This allows a better force and torque transmission from the vibration drive train 3 to the screed body 4 and, thus, screed device 2.

In order to make the screed device 2 of the paver 1 vibrate, the rotatable vibration shaft 10 of the vibration drive train 3 comprises an unbalance mass 11 that is arranged eccentrically to the rotational axis A. The unbalance mass 11 is arranged between the first and second shaft ends 10a, 10b, in particular, between the first ball bearing unit 30a and the second ball bearing unit 30b.

In operation, the rotatable vibration shaft 10 of the vibration drive train 3 is driven by means of a motor 50 that is connected to the first shaft end 10a of the vibration shaft 10 via a clutch 30. The clutch 30 may be adapted for coupling the motor 50 with the vibration shaft 10 in a form-fit, force-fit and/or material-fit manner. For example, as schematically shown here, the motor shaft of the motor 50 can be inserted into the first shaft end 10a and fastened by means of a screw connection.

In order to transmit the torque generated by the motor 50 to the screed body 4, the vibration drive train 10 has a torque support 60. The torque support 60 is configured to support the torque provided by the motor 50 towards the screed support structure 5 of the screed body 4. In this preferred embodiment, the torque support 60 is adapted to provide translational displacement along the rotational axis A and orthogonal to the rotational axis A, which is necessary in operation due to the generated vibration.

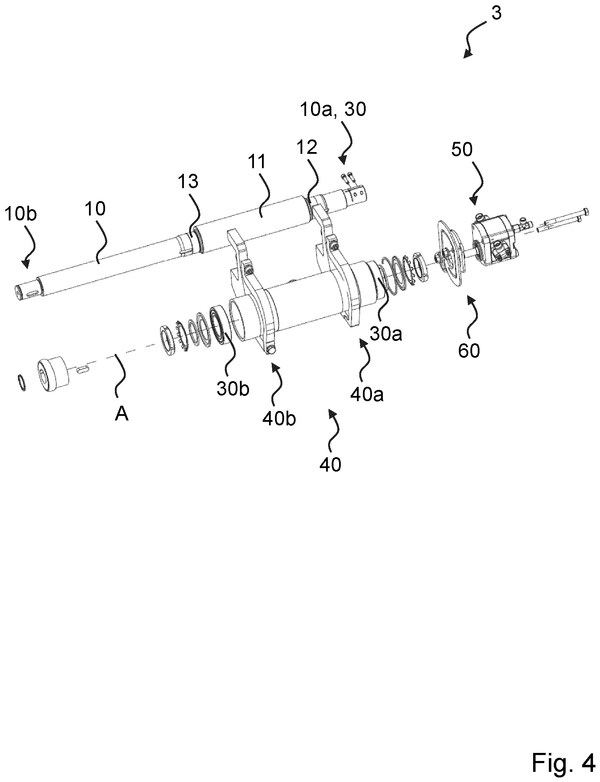

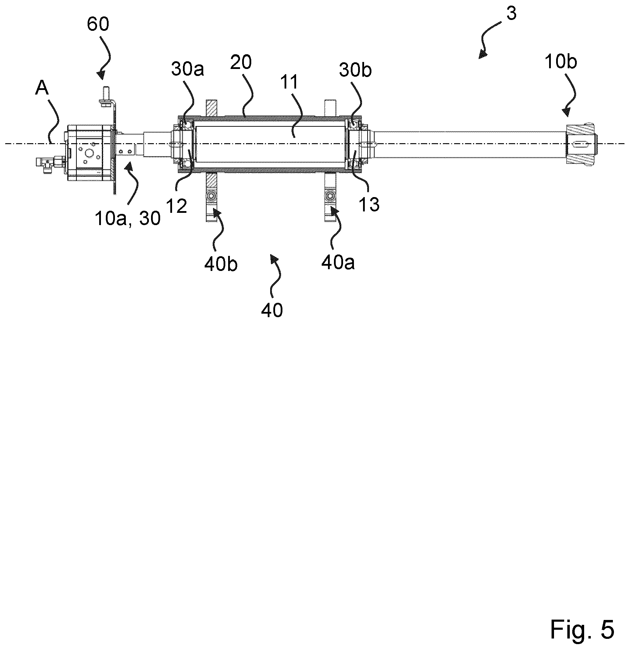

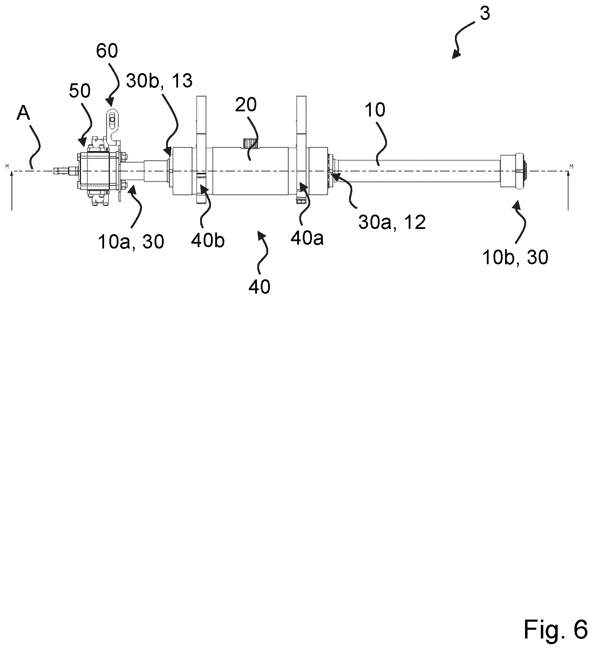

Figures 4 to 6 are different views of the vibration drive train of the preferred embodiment of the screed body shown in Figure 3. Figure 4 is a three-dimensional, exploded view of the vibration drive train, Figure 5 is a sectional side view of the vibration drive train, and Figure 6 is a side view of the vibration drive train.

From these various views, it is clear that the unbalance mass 11 in this preferred embodiment is shaped as a cylindrical shaft section, which is arranged eccentrically to the axis of rotation A of the vibration shaft 10. However, it is to be understood that alternative preferred embodiments may comprise a mass welded or bolted to the vibration shaft as unbalance mass 11. However, in the present embodiment, shown in Figures 4 to 6, the unbalance mass 11 is arranged between a first cylindrical shaped bearing section 12 and a second cylindrical shaped bearing section 13 of the rotatable vibration shaft 10.

### REFERENCE SIGNS

- 1: paver
- 2: screed device
- 3: vibration drive train
- 4: screed body
- 4a,b: end faces of a screed body
- 5: screed support structure
- 6: screed unit
- 6a: main screed units
- 6b: displaceable screed units
- 7: screed attachment unit
- 8: lifting device
- 9: angle adjustment device
- 10: rotatable vibration shaft
- 10a: first shaft end
- 10b: second shaft end
- 11: unbalance mass
- 12: first cylindrical shaped bearing section
- 13: second cylindrical shaped bearing section
- 20: torsionally stiff tubular bearing housing
- 30: clutch
- 30a: first ball bearing unit
- 30b: second ball bearing unit
- 40: fastening device
- 40a: first fastening unit
- 40b: second fastening unit
- 50: motor
- 60: torque support
- 70: linear drive and guide unit
- A: rotational axis
- S: swivel axis
- T: direction of travel

## Claims

1. A vibration drive train (3) for making a screed body (4) of a screed device (2) of a paver (1) vibrate, the vibration drive train (3) comprising:
- a rotatable vibration shaft (10) extending along a rotational axis (A) between a first shaft end (10a) and a second shaft end (10b), wherein the vibration shaft (10) comprises an unbalance mass (11) for generating a vibration arranged between the first and second shaft ends (10a, 10b),
- a torsionally stiff tubular bearing housing (20), wherein the vibration shaft (10) extends through the tubular bearing housing (20), and wherein the tubular bearing housing (20) is adapted to be firmly attached to the screed body (4),
- a first ball bearing unit (30a) and second ball bearing unit (30b) arranged inside the tubular bearing housing (20) spaced apart along the rotational axis (A), wherein the first and second bearing unit (30a, 30b) are adapted for rotatably bearing the vibration shaft (10) towards the tubular bearing housing (20).

2. A vibration drive train (3) according to the preceding claim 1, wherein the first ball bearing unit (30a) and/or the second ball bearing unit (30b) is a groove ball bearing and/or is a bearing that is not adapted for levelling off misalignments.

3. A vibration drive train (3) according to any one of the preceding claims 1 or 2, wherein
- the unbalance mass (11) and/or the tubular bearing housing (20) is arranged between the first ball bearing unit (30a) and the second ball bearing unit (30b); and/or
- the unbalance mass (11) and/or the tubular bearing housing (20) extend from the first ball bearing unit (30a) and the second ball bearing unit (30b).

4. A vibration drive train (3) according to any one of the preceding claims 1 to 3, wherein the unbalance mass (11) is
- shaped as a cylindrical shaft section, which is arranged eccentrically to the axis of rotation (A) of the vibration shaft (10), and/or
- a mass welded and/or bolted to the vibration shaft (10),
wherein preferably, the rotatable vibration shaft (10) comprises a first cylindrical shaped bearing section (12) and a second cylindrical shaped bearing section (13),
wherein the unbalance mass (11) is arranged between the first cylindrical shaped bearing section (12) and the second cylindrical shaped bearing section (13).

5. A vibration drive train (3) according to any one of the preceding claims 1 to 4, wherein
- the vibration shaft (10), in particular the first shaft end (10a) of the vibration shaft (10), is provided with a clutch (30) to couple the motor (50) with the vibration shaft (10),
- wherein preferably the clutch is adapted for coupling the motor with the vibration shaft in a form-fit, force-fit and/or material-fit manner.

6. A vibration drive train (3) according to any one of the preceding claims 1 to 5, comprising a fastening device (40) configured for fastening the tubular bearing housing (20) to a screed support structure (5) of the screed body (4).

7. A vibration drive train (3) according to any one of the preceding claims 1 to 6, wherein the fastening device (40) is arranged on the outside of the tubular bearing housing (20).

8. A vibration drive train (3) according to any one of the preceding claims 1 to 7, wherein the fastening device (40) is adapted to firmly attach the vibration drive train (3) to the screed device (2) in a translational direction and/or rotational direction.

9. A vibration drive train (3) according to any one of the preceding claims 1 to 8, wherein the fastening device (40) comprises a first fastening unit (40a) arranged in the area of the first bearing unit (30a) and/or a second fastening unit (40b) arranged in the area of the second bearing unit (30b).

10. A vibration drive train (3) according to any one of the preceding claims 1 to 9, comprising a motor (50) that is connected to the first shaft end (10a) of the vibration shaft (10) via the clutch (30).

11. A vibration drive train (3) according to any one of the preceding claims 1 to 10, comprising a torque support (60) that is configured to support the torque provided by the motor (50) towards the screed body (4), in particular the screed support structure (5).

12. A vibration drive train (3) according to the preceding claim 11, wherein the torque support (60) is adapted to provide translational displacement along the rotational axis (A) and/or orthogonal to the rotational axis (A).

13. A screed body (4) comprising at least one vibration drive train (3) according to any one of the preceding claims 1 to 12.

14. A screed device (2) comprising at least one screed body (4) according to preceding claim 13. preceding claims 1 to 12.

15. A paver (1) comprising at least one screed device (2) according to the preceding claim 14.

## Patentansprüche

1. Vibrationsantriebsstrang (3), zum Vibrieren bringen eines Bohlenkörpers (4) einer Bohlenvorrichtung (2) eines Straßenfertigers (1), der Vibrationsantriebsstrang (3) umfassend:
- eine drehbare Vibrationswelle (10), die sich entlang einer Drehachse (A) zwischen einem ersten Wellenende (10a) und einem zweiten Wellenende (10b) erstreckt, wobei die Vibrationswelle (10) eine Unwuchtmasse (11) zur Erzeugung einer Vibration, die zwischen dem ersten und dem zweiten Wellenende (10a, 10b) angeordnet ist, aufweist,
- ein verwindungssteifes rohrförmiges Lagergehäuse (20), wobei sich die Vibrationswelle (10) durch das rohrförmige Lagergehäuse (20) hindurch erstreckt, und wobei das rohrförmige Lagergehäuse (20) dazu geeignet ist, fest mit der Bohlenvorrichtung (4) verbunden zu werden,
- eine erste Kugellagereinheit (30a) und eine zweite Kugellagereinheit (30b), die im Inneren des röhrenförmigen Lagergehäuses (20) entlang der Drehachse (A) beabstandet angeordnet sind, wobei die erste und die zweite Lagereinheit (30a, 30b) zum drehbaren Lagern der Vibrationswelle (10) in Richtung des röhrenförmigen Lagergehäuses (20) ausgebildet sind.

2. Vibrationsantriebsstrang (3) nach dem vorhergehenden Anspruch 1, wobei die erste Kugellagereinheit (30a) und/oder die zweite Kugellagereinheit (30b) ein Rillenkugellager und/oder ein Lager ist, das nicht zum Ausgleich von Fluchtungsfehlern geeignet ist.

3. Vibrationsantriebsstrang (3) nach einem der vorhergehenden Ansprüche 1 oder 2, wobei
- die Unwuchtmasse (11) und/oder das rohrförmige Lagergehäuse (20) zwischen der ersten Kugellagereinheit (30a) und der zweiten Kugellagereinheit (30b) angeordnet ist; und/oder
- die Unwuchtmasse (11) und/oder das rohrförmige Lagergehäuse (20) sich von der ersten Kugellagereinheit (30a) und der zweiten Kugellagereinheit (30b) erstrecken.

4. Vibrationsantriebsstrang (3) nach einem der vorhergehenden Ansprüche 1 bis 3, wobei die Unwuchtmasse (11)
- als zylindrischer Wellenabschnitt ausgebildet ist, der exzentrisch zur Drehachse (A) der Vibrationswelle (10) angeordnet ist, und/oder
- eine mit der Vibrationswelle (10) verschweißte und/oder verschraubte Masse,
wobei vorzugsweise die drehbare Vibrationswelle (10) einen ersten zylindrisch geformten Lagerabschnitt (12) und einen zweiten zylindrisch geformten Lagerabschnitt (13) aufweist, wobei die Unwuchtmasse (11) zwischen dem ersten zylindrisch geformten Lagerabschnitt (12) und dem zweiten zylindrisch geformten Lagerabschnitt (13) angeordnet ist.

5. Vibrationsantriebsstrang (3) nach einem der vorhergehenden Ansprüche 1 bis 4, **dadurch gekennzeichnet, dass**
- die Vibrationswelle (10), insbesondere das erste Wellenende (10a) der Vibrationswelle (10), mit einer Kupplung (30) versehen ist, um den Motor (50) mit der Vibrationswelle (10) zu kuppeln,
- wobei vorzugsweise die Kupplung zur form-, kraft- und/oder stoffschlüssigen Kopplung des Motors mit der Vibrationswelle ausgebildet ist.

6. Vibrationsantriebsstrang (3) nach einem der vorhergehenden Ansprüche 1 bis 5, umfassend eine Befestigungsvorrichtung (40), die zur Befestigung des rohrförmigen Lagergehäuses (20) an einer Bohlentragstruktur (5) des Bohlenkörpers (4) ausgebildet ist.

7. Vibrationsantriebsstrang (3) nach einem der vorhergehenden Ansprüche 1 bis 6, wobei die Befestigungsvorrichtung (40) an der Außenseite des rohrförmigen Lagergehäuses (20) angeordnet ist.

8. Vibrationsantriebsstrang (3) nach einem der vorhergehenden Ansprüche 1 bis 7, wobei die Befestigungsvorrichtung (40) ausgebildet ist, den Vibrationsantriebsstrang (3) an der Bohlenvorrichtung (2) in einer Translations- und/oder Rotationsrichtung fest zu befestigen.

9. Vibrationsantriebsstrang (3) nach einem der vorhergehenden Ansprüche 1 bis 8, wobei die Befestigungsvorrichtung (40) eine im Bereich der ersten Lagereinheit (30a) angeordnete erste Befestigungseinheit (40a) und/oder eine im Bereich der zweiten Lagereinheit (30b) angeordnete zweite Befestigungseinheit (40b) umfasst.

10. Vibrationsantriebsstrang (3) nach einem der vorhergehenden Ansprüche 1 bis 9, umfassend einen Motor (50), der über die Kupplung (30) mit dem ersten Wellenende (10a) der Vibrationswelle (10) verbunden ist.

11. Vibrationsantriebsstrang (3) nach einem der vorangehenden Ansprüche 1 bis 10, umfassend eine Drehmomentstütze (60), die ausgebildet ist, das vom Motor (50) bereitgestellte Drehmoments auf den Bohlenkörper (4), insbesondere die Bohlentragstruktur (5), abzustützen.

12. Vibrationsantriebsstrang (3) nach dem vorhergehenden Anspruch 11, wobei die Drehmomentstütze (60) ausgebildet ist, eine translatorische Verschiebung entlang der Rotationsachse (A) und/oder orthogonal zur Rotationsachse (A) bereitzustellen.

13. Bohlenkörper (4) umfassend mindestens einen Vibrationsantriebsstrang (3) nach einem der vorhergehenden Ansprüche 1 bis 12.

14. Bohlenvorrichtung (2) mit mindestens einem Bohlenkörper (4) nach dem vorhergehenden Anspruch 13. vorhergehenden Ansprüchen 1 bis 12.

15. Fertiger (1) umfassend mindestens eine Bohlenvorrichtung (2) nach dem vorhergehenden Anspruch 14.

## Revendications

1. Chaîne cinématique vibrante (3) pour faire vibrer un corps de barre lisseuse (4) d'un dispositif de barre lisseuse (2) d'un finisseur (1), la chaîne cinématique vibrante (3) comprenant :
- un arbre vibrant rotatif (10) s'étendant le long d'un axe de rotation (A) entre une première extrémité d'arbre (10a) et une seconde extrémité d'arbre (10b), où l'arbre vibrant (10) comprend une masse de déséquilibre (11) pour générer une vibration agencée entre les première et seconde extrémités d'arbre (10a, 10b),
- un logement de roulement tubulaire rigide en torsion (20), où l'arbre vibrant (10) s'étend à travers le logement de roulement tubulaire (20), et où le logement de roulement tubulaire (20) est adapté pour être fermement fixé au corps de barre lisseuse (4),
- une première unité de roulement à billes (30a) et une seconde unité de roulement à billes (30b) agencées à l'intérieur du logement de roulement tubulaire (20) espacées le long de l'axe de rotation (A), où les première et seconde unités de roulement (30a, 30b) sont adaptées pour supporter en rotation l'arbre vibrant (10) vers le logement de roulement tubulaire (20).

2. Chaîne cinématique vibrante (3) selon la revendication 1 précédente, dans laquelle la première unité de roulement à billes (30a) et/ou la seconde unité de roulement à billes (30b) est un roulement à billes à gorges et/ou est un roulement qui n'est pas adapté pour compenser les désalignements.

3. Chaîne cinématique vibrante (3) selon l'une quelconque des revendications 1 et 2 précédentes, dans laquelle
- la masse de déséquilibre (11) et/ou le logement de roulement tubulaire (20) est/sont agencé(e)(s) entre la première unité de roulement à billes (30a) et la seconde unité de roulement à billes (30b) ; et/ou
- la masse de déséquilibre (11) et/ou le logement de roulement tubulaire (20) s'étend/s'étendent de la première unité de roulement à billes (30a) et de la seconde unité de roulement à billes (30b).

4. Chaîne cinématique vibrante (3) selon l'une quelconque des revendications 1 à 3 précédentes, dans laquelle la masse de déséquilibre (11) est
- façonnée comme une section d'arbre cylindrique, qui est agencée de manière excentrique par rapport à l'axe de rotation (A) de l'arbre vibrant (10), et/ou
- une masse soudée et/ou boulonnée à l'arbre vibrant (10),
dans laquelle de préférence, l'arbre vibrant rotatif (10) comprend une première section de roulement de forme cylindrique (12) et une seconde section de roulement de forme cylindrique (13),
dans laquelle la masse de déséquilibre (11) est agencée entre la première section de roulement de forme cylindrique (12) et la seconde section de roulement de forme cylindrique (13).

5. Chaîne cinématique vibrante (3) selon l'une quelconque des revendications 1 à 4 précédentes, dans laquelle
- l'arbre vibrant (10), en particulier la première extrémité d'arbre (10a) de l'arbre vibrant (10), est muni d'un embrayage (30) pour coupler le moteur (50) à l'arbre vibrant (10),
- dans laquelle de préférence l'embrayage est adapté pour coupler le moteur à l'arbre vibrant d'une manière adaptée à la forme, à la force et/ou à la matière.

6. Chaîne cinématique vibrante (3) selon l'une quelconque des revendications 1 à 5 précédentes, comprenant un dispositif de fixation (40) configuré pour fixer le logement de roulement tubulaire (20) à une structure de support de barre lisseuse (5) du corps de barre lisseuse (4).

7. Chaîne cinématique vibrante (3) selon l'une quelconque des revendications 1 à 6 précédentes, dans laquelle le dispositif de fixation (40) est agencé à l'extérieur du logement de roulement tubulaire (20).

8. Chaîne cinématique vibrante (3) selon l'une quelconque des revendications 1 à 7 précédentes, dans laquelle le dispositif de fixation (40) est adapté pour fixer fermement la chaîne cinématique vibrante (3) au dispositif de barre lisseuse (2) dans une direction de translation et/ou une direction de rotation.

9. Chaîne cinématique vibrante (3) selon l'une quelconque des revendications 1 à 8 précédentes, dans laquelle le dispositif de fixation (40) comprend une première unité de fixation (40a) agencée dans la zone de la première unité de roulement (30a) et/ou une seconde unité de fixation (40b) agencée dans la zone de la seconde unité de roulement (30b).

10. Chaîne cinématique vibrante (3) selon l'une quelconque des revendications 1 à 9 précédentes, comprenant un moteur (50) qui est relié à la première extrémité d'arbre (10a) de l'arbre vibrant (10) par l'intermédiaire de l'embrayage (30).

11. Chaîne cinématique vibrante (3) selon l'une quelconque des revendications 1 à 10 précédentes, comprenant un support de couple (60) qui est configuré pour supporter le couple fourni par le moteur (50) vers le corps de barre lisseuse (4), en particulier la structure de support de barre lisseuse (5).

12. Chaîne cinématique vibrante (3) selon la revendication 11 précédente, dans laquelle le support de couple (60) est adapté pour fournir un déplacement en translation le long de l'axe de rotation (A) et/ou orthogonal à l'axe de rotation (A).

13. Corps de barre lisseuse (4) comprenant au moins une chaîne cinématique vibrante (3) selon l'une quelconque des revendications 1 à 12 précédentes.

14. Dispositif de barre lisseuse (2) comprenant au moins un corps de barre lisseuse (4) selon la revendication 13 précédente.

15. Finisseur (1) comprenant au moins un dispositif de barre lisseuse (2) selon la revendication 14 précédente.
